(19) Europäisches Patentamt
European Patent Office
Office européen des brevets

(11) **EP 4 756 906 A1**

(12) **EUROPEAN PATENT APPLICATION**
published in accordance with Art. 153(4) EPC

(43) Date of publication:
**10.06.2026 Bulletin 2026/24**

(21) Application number: **24849444.5**

(22) Date of filing: **23.07.2024**

(51) International Patent Classification (IPC):
$H01M\ 4/36$ (2006.01)    $H01M\ 4/48$ (2010.01)
$H01M\ 10/052$ (2010.01)    $C01G\ 45/12$ (2025.01)
$C01G\ 53/00$ (2025.01)    $C01B\ 25/45$ (2006.01)
$C01G\ 31/02$ (2006.01)    $H01M\ 4/02$ (2006.01)

(52) Cooperative Patent Classification (CPC):
C01B 25/45; C01G 31/02; C01G 45/12;
C01G 53/00; H01M 4/02; H01M 4/36; H01M 4/48;
H01M 10/052; Y02E 60/10

(86) International application number:
**PCT/KR2024/010599**

(87) International publication number:
**WO 2025/028875 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.08.2023 KR 20230101662**

(71) Applicant: **SK On Co., Ltd.**
**Seoul 03161 (KR)**

(72) Inventors:
• **AN, Woo Hyun**
  **Daejeon 34124 (KR)**
• **LEE, Seok Hee**
  **Daejeon 34124 (KR)**

(74) Representative: **Stolmár & Partner**
**Patentanwälte PartG mbB**
**Blumenstraße 17**
**80331 München (DE)**

(54) **POSITIVE ELECTRODE ACTIVE MATERIAL, LITHIUM SECONDARY BATTERY COMPRISING SAME, AND METHOD FOR MANUFACTURING POSITIVE ELECTRODE ACTIVE MATERIAL**

(57)    A cathode active material according to embodiments of the present disclosure includes: lithium metal oxide particles; and a conductive coating that partially covers the surface of the lithium metal oxide particles and includes a plurality of conductive particles. The conductive coating includes a first pattern having an island shape and a second pattern having a chain shape. According to embodiments of the present disclosure, the cathode active material may be formed by stirring lithium metal oxide particles and conductive particles using a resonant mixer. According to embodiments of the present disclosure, a lithium secondary battery including the above-described cathode active material may be provided.

[FIG. 1]

**Description**

[Technical Field]

The present disclosure relates to a positive electrode (cathode) active material, a lithium secondary battery including the same, and a method for manufacturing a cathode active material.

[Background Art]

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have recently been developed and applied as power sources for eco-friendly vehicles, such as hybrid vehicles.

Examples of secondary batteries may include a lithium secondary battery, a nickelcadmium battery, and a nickel-hydrogen battery. Among these, the lithium secondary battery has been actively developed and applied due to its high operating voltage, high energy density per unit weight, and advantages in charging speed and weight reduction.

The secondary battery may further include a liquid electrolyte. For example, an electrode assembly may be manufactured by interposing a separator between a cathode and an anode, and the electrode assembly may be accommodated in an outer case. The liquid electrolyte may be injected into the outer case to impregnate the cathode and the anode.

The secondary battery may also include a solid electrolyte. The solid electrolyte may be used in place of the liquid electrolyte described above. For example, the electrode assembly may include a cathode, an anode, and an intermediate electrolyte layer. The solid electrolyte may also be included in either the cathode or the anode.

[Summary of Invention]

[Problems to be Solved by Invention]

An object of the present disclosure is to provide a cathode active material having improved electrochemical properties.

Another object of the present disclosure is to provide a method for manufacturing a cathode active material having improved electrochemical properties.

Still another object of the present disclosure is to provide a lithium secondary battery.

[Means for Solving Problems]

A cathode active material according to embodiments of the present disclosure may include: lithium metal oxide particles; and a conductive coating that partially covers the surface of the lithium metal oxide particles and includes a plurality of conductive particles. The conductive coating may include a first pattern having an island shape and a second pattern having a chain shape.

In some embodiments, the first pattern may have a diameter of 0.03 $\mu$m or more and less than 1.0 $\mu$m.

In some embodiments, the second pattern may have a length of 1.0 $\mu$m to 10.0 $\mu$m.

In some embodiments, the conductive coating may further include a third pattern having a web shape formed by connecting a plurality of the second patterns.

In some embodiments, the content of the conductive coating may be 0.1 part by weight to 1 part by weight based on 100 parts by weight of the lithium metal oxide particles.

In some embodiments, the conductive particles may include at least one of carbon black and carbon nanotubes.

In some embodiments, the conductive coating may cover 70% or less of the surface of the lithium metal oxide particles.

In some embodiments, the lithium metal oxide particles may have a median particle diameter ($D_{50}$) of 1 to 15 $\mu$m.

A lithium secondary battery according to embodiments of the present disclosure may include: a cathode including the cathode active material according to the above-described embodiments; and an anode disposed opposite the cathode.

In some embodiments, the cathode may further include a solid electrolyte.

In a method for manufacturing a cathode active material according to embodiments of the present disclosure, a mixture of lithium metal oxide particles and conductive particles may be prepared. The mixture may be stirred using a resonant mixer. The content of the conductive particles in the mixture may be 0.1 part by weight to 1 part by weight based on 100 parts by weight of the lithium metal oxide particles.

In some embodiments, the step of stirring the mixture using a resonant mixer may include coating the conductive particles on the surface of the lithium metal oxide particles.

In some embodiments, the conductive particles partially cover the surface of the lithium metal oxide particles.

In some embodiments, some of the conductive particles may agglomerate into an island shape, while others may be connected together in a chain shape.

In some embodiments, the conductive particles may include at least one of carbon black and carbon nanotubes.

In some embodiments, the carbon black may have a specific surface area of 65 $m^2/g$ to 120 $m^2/g$.

In some embodiments, the carbon nanotube may have a specific surface area of 250 $m^2/g$ to 700 $m^2/g$.

In some embodiments, the resonant mixer may be an acoustic resonant mixer.

In some embodiments, the mixture may be stirred at a frequency of 58 Hz to 62 Hz.

In some embodiments, the mixture may be stirred at an acceleration of greater than 40 G and less than 75 G.

[Advantageous effects]

According to embodiments of the present disclosure, a cathode active material may include a conductive coating having an island shape and a chain shape. The stability, lithium ion conductivity, and electronic conductivity of the cathode active material may be improved. A lithium secondary battery having high power and high energy density may be provided.

According to embodiments of the present disclosure, a conductive material may be coated on lithium metal oxide particles using an acoustic resonant mixer. The conductive material partially covers the lithium metal oxide particles, and contact between the lithium metal oxide particles and the solid electrolyte may also be increased. Therefore, both the electronic conductivity and lithium ion conductivity of the cathode active material may be enhanced.

[Brief Description of Drawings]

FIGS. 1 and 2 are schematic views illustrating cathode active materials according to exemplary embodiments, respectively.

FIG. 3 is a process flowchart for describing a method for manufacturing a cathode active material according to exemplary embodiments.

FIGS. 4 to 7 are scanning electron microscope (SEM) images of the cathode active materials prepared sequentially in Examples 1 to 4.

FIGS. 8 and 9 are SEM images of partial regions of the surface of the cathode active materials prepared in Comparative Examples 1 and 2, respectively.

FIGS. 10 and 11 are SEM images of a partial region of the surface of the cathode active material manufactured in Comparative Example 4.

FIG. 12 is an SEM image of a partial region of the surface of the cathode active material manufactured in Comparative Example 5.

[Mode for Carrying out Invention]

According to embodiments of the present disclosure, a cathode active material including a lithium metal oxide and a lithium secondary battery including the same are provided.

According to embodiments of the present disclosure, a method for manufacturing a cathode active material is provided.

The lithium secondary battery according to embodiments of the present disclosure may be widely applied in green technology fields, such as electric vehicles, battery charging stations, as well as solar power generation, wind power generation, and the like, which use the batteries. In addition, the lithium secondary battery according to the embodiments of the present disclosure may be used in eco-friendly electric vehicles, hybrid vehicles, and the like, which are aimed at mitigating climate change by reducing air pollution and greenhouse gas emissions.

Hereinafter, exemplary embodiments of the present disclosure will be described in detail with reference to the accompanying drawings. However, these embodiments are merely illustrative, and the present disclosure is not limited to the specific embodiments described as examples.

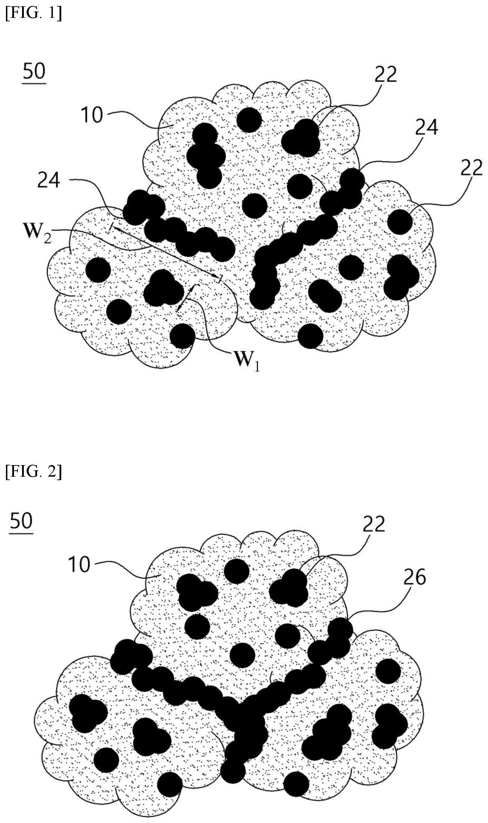

FIG. 1 is a schematic diagram illustrating a cathode active material according to exemplary embodiments of the present disclosure.

Referring to FIG. 1, a cathode active material 50 may include a core particle 10 and a conductive coating covering the surface of the core particle 10.

The core particle 10 may reversibly intercalate and deintercalate lithium ions and provide cathode activity. For example, the core particle 10 may include lithium metal oxide particles.

The core particle 10 may include one or more compounds selected from a lithium iron phosphate compound, a lithium cobalt oxide, a lithium manganese oxide, a lithium nickel oxide, or a lithium composite oxide. For example, the core particle 10 may include a layered compound such as lithium cobalt oxide ($LiCoO_2$) or lithium nickel oxide ($LiNiO_2$), or a lithium manganese oxide such as $LiMnO_3$, $LiMn_2O_3$, and $LiMnO_2$; a lithium copper oxide ($Li_2CuO_2$); a vanadium oxide such as $LiV_3O_8$, $LiFe_3O_4$, $V_2O_5$, and $Cu_2VO_7$; or a lithium iron phosphate oxide such as $LiFePO_4$.

In some embodiments, the core particle 10 may include a compound represented by Formula 1 below.

[Formula 1] $\quad$ $Li_aNi_bM_{1-b}O_2$

In Formula 1, a and b may satisfy $0.95 \leq a \leq 1.08$, and $b \geq 0.5$, and M may be at least one element selected from the group consisting of Na, Mg, Ca, Y, Ti, Zr, Hf, V, Nb, Ta, Cr, Mo, W, Mn, Co, Fe, Cu, Ag, Zn, B, Al, Ga, C, Si, Sn, Ba and Sr.

In one embodiment, the core particle 10 includes nickel (Ni) and may further include at least one of cobalt (Co) or manganese (Mn). For example, a nickel-cobalt-manganese (NCM)-based lithium oxide may be used as the cathode active material.

For example, nickel (Ni) may be provided as a metal associated with the capacity of the lithium secondary battery. The higher the content of nickel, the greater the improvement in capacity and output of the lithium secondary battery. However, if the content of nickel increases excessively, the cycle life of the lithium secondary battery may be reduced, and it may be disadvantageous in terms of mechanical and electrical stability.

In one embodiment, the conductivity or resistance of the lithium secondary battery may be improved by cobalt (Co), as well as the mechanical and electrical stability of the lithium secondary battery may be improved by manganese (Mn).

The chemical structure represented by Formula 1 indicates a bonding relationship among elements included in the lattice structure or the crystal structure of the core particle 10 and does not exclude the presence of additional elements. For example, M may serve as a main active element of the core particle 10. Formula 1 is provided to represent the bonding relationship among the main active elements and should be understood as encompassing the introduction or substitution of additional elements.

In one embodiment, auxiliary elements may be further included to enhance the chemical stability of the core particle 10 or its crystal structure in addition to the main active element. The auxiliary elements may be incorporated into the crystal structure to form bonds, and in this case, it should be understood that they fall within the chemical structure range represented by Formula 1.

In some embodiments, the core particle 10 may have a single-particle form or may have a form of a secondary particle formed by assembling a plurality of primary particles.

The conductive coating may include conductive particles. For example, conductive particles may be attached to the surface of the core particle 10 to form a conductive coating.

The formation of the conductive coating on the surface of the core particle 10 may provide an additional electron transfer path. Therefore, for example, electrons transferred from the electrode current collector may smoothly migrate within the cathode active material 50. In addition, an increase in interfacial resistance due to contact between the core particles may be prevented.

In one embodiment, the electronic conductivity of the cathode active material layer may be increased even when the conductive material content within the cathode active material layer is reduced by the conductive coating. Accordingly, the amount of conductive material used may be reduced, and the overall contact area between the conductive material and the electrolyte may be reduced, thereby suppressing side reactions.

The conductive coating may partially cover the surface of the core particle 10. For example, the conductive coating may not be formed on at least a partial region of the surface of the core particle 10.

If the conductive coating uniformly covers the entire surface of the lithium metal oxide particle, the migration of lithium ions on the surface of the lithium metal oxide particle may be reduced. Consequently, the ionic conductivity of the cathode active material may be reduced, and the capacity and output of the lithium secondary battery may be reduced.

However, according to exemplary embodiments, the conductive coating may be formed only on a partial region of the surface of the core particle 10, thereby ensuring electronic conductivity through the conductive coating while simultaneously improving lithium ion conductivity.

In one embodiment, the conductive coating may cover 10% or more, 20% or more, or 30% or more of the surface of the core particle 10. In one embodiment, the conductive coating may cover 80% or less, 70% or less, 60% or less, or 50% or less of the surface of the core particle 10.

Within the above range, the electronic conductivity and stability of the cathode active material may be enhanced, allowing the cathode active material to exhibit high ionic conductivity. Accordingly, the output, capacity, and cycle life characteristics of the lithium secondary battery may be further improved.

According to exemplary embodiments, the conductive coating may include a first pattern 22 and a second pattern 24 that have different shapes.

The first pattern 22 may have an island shape. For example, the first pattern 22 may be formed by dispersing the respective conductive particles on the surface of the core particle 10, or some of the conductive particles may be formed by agglomerating with each other.

The island shape may refer to a shape in which the conductive particles are distributed in a discontinuous manner and may have a spherical, hemispherical, cylindrical, oval, or irregular shape.

By including the first pattern 22 having an island shape in the conductive coating, ion conductivity at the surface of the cathode active material may be improved. Therefore, for example, the migration of lithium ions between the cathode active material and the electrolyte may be facilitated, thereby improving the capacity characteristics of the lithium secondary battery.

The second pattern 24 may have a chain shape. For example, the second pattern 24 may be formed by continuously connecting some of the conductive particles.

The chain shape may refer to a chain in which a plurality of conductive particles are connected and extend. For example, the second pattern 24 may have a linear shape, a curved shape, a broken-line shape, a zigzag shape, a wave shape, an arc shape, etc., and may further include a plurality of branches branched from these shapes.

By including the second pattern 24 having a chain shape in the conductive coating, conductivity between the cathode active material particles may be enhanced and the internal resistance of the cathode may be reduced. Consequently, the rate characteristics of the lithium secondary battery may be improved.

The conductive coating may include both the first pattern 22 and the second pattern 24, thereby improving both the ionic conductivity and electron transport of the cathode active material 50. For example, if the conductive coating includes only island-shaped patterns, electrons may be isolated within the island patterns. For example, if the conductive coating includes only chain-shaped patterns, lithium ions may be isolated within the region surrounded by the chain-shaped patterns.

In one embodiment, the first pattern 22 may have a diameter $W_1$ of 0.03 $\mu$m or more and less than 1.0 $\mu$m. For example, the diameter may refer to the length of the longest portion of the first pattern 22.

Within the above range, the ionic conductivity and electronic conductivity of the cathode active material may be improved. For example, if the diameter of the first pattern 22 is excessively large, the ionic conductivity of the first pattern 22 may be relatively low, and electron transfer may be hindered due to agglomeration of the conductive material.

In one embodiment, the diameter $W_1$ of the first pattern 22 may be 0.03 $\mu$m to 0.5 $\mu$m, 0.05 $\mu$m to 0.5 $\mu$m, or 0.1 $\mu$m to 0.3 $\mu$m.

In one embodiment, the second pattern 24 may have a length $W_2$ of 1.0 $\mu$m to 10.0 $\mu$m. For example, the length $W_2$ may be the length of the longest portion of the second pattern 24. If the second pattern 24 further includes a plurality of branches branched from a single branch, the length $W_2$ may be the length of the longest branch of the second pattern 24.

Within the above range, the electronic conductivity and ionic conductivity of the cathode active material may be further improved. For example, if the length of the second pattern 24 is excessively short, coating coverage may be reduced, thereby reducing the electron transport path. If the length of the second pattern 24 is excessively long, the migration of lithium ions may not be smooth.

In one embodiment, the length $W_2$ of the second pattern 24 may be 1.0 $\mu$m to 7 $\mu$m, 1.0 $\mu$m to 5.0 $\mu$m, or 1.0 $\mu$m to 3.5 $\mu$m.

In one embodiment, the second pattern may have a length greater than the diameter of the first pattern.

In some embodiments, some of the second patterns of the conductive coating may be interconnected.

FIG. 2 is a schematic diagram illustrating a cathode active material according to exemplary embodiments.

Referring to FIG. 2, the conductive coating may further include a third pattern 26 formed by connecting a plurality of the second patterns. The third pattern 26 may have a web shape.

The web shape may refer to a network structure formed by connecting a plurality of chain-like structures. For example, at least two second patterns may be connected to each other while intersecting to form the third pattern 26, and the third pattern 26 may include chains extending in multiple directions.

By including the web-shaped third pattern 26, the conductive coating may additionally provide a continuous electron transport path through the third pattern 26 on the surface of the core particle 10. Therefore, the electronic conductivity of the cathode active material 50 may be further enhanced, and the output characteristics of the lithium secondary battery may be improved.

According to exemplary embodiments, the conductive coating may include carbon black and/or carbon nanotubes.

In some embodiments, the carbon black may include acetylene black, furnace black, Ketjen black, channel black, etc. These may be included alone or in combination of two or more thereof.

In one embodiment, the carbon black may have the form of an aggregate of primary particles or a secondary structure.

In some embodiments, the carbon nanotubes may include single-walled nanotubes (SWCNTs), double-walled carbon nanotubes (DWCNTs), and/or multi-walled carbon nanotubes (MWCNTs). These may be used alone or in combination of two or more thereof.

In one embodiment, the conductive coating may include carbon black, such as acetylene black. Acetylene black has high electronic conductivity, chemical stability, and mechanical strength, which may further improve the output characteristics and stability of the lithium secondary battery.

In one embodiment, the carbon black may have a diameter of 10 nm to 100 nm, 20 nm to 50 nm, or 25 nm to 30 nm. If the conductive particles are aggregates of primary particles or have a secondary structure, the diameter may refer to the diameter of the primary particle.

In one embodiment, the carbon nanotube may have a diameter of 10 nm or less. For example, the diameter of the carbon nanotube may be 1 nm to 10 nm, 2 nm to 10 nm, 4 nm to 9 nm, or 6 nm to 9 nm. In one embodiment, the diameter of the carbon nanotube refers to the length in the minor-axis direction.

Within the above diameter range, the bonding strength to the core particle may be further improved, and a thin conductive coating may be formed.

In one embodiment, the carbon black may have a specific surface area of 65 $m^2$/g to 120 $m^2$/g, 70 $m^2$/g to 120 $m^2$/g, or 80 $m^2$/g to 110 $m^2$/g. The specific surface area may be measured by the Brunauer-Emmett-Teller (BET) method.

In one embodiment, the specific surface area of the carbon nanotube may be 250 $m^2$/g to 700 $m^2$/g, 300 $m^2$/g to 700 $m^2$/g, or 400 $m^2$/g to 600 $m^2$/g. The specific surface area may be measured by the Brunauer-Emmett-Teller (BET) method.

Within the above specific surface area range, aggregation of the conductive particles may be suppressed, and a thin coating layer may be formed. In addition, the coverage ratio relative to the core particle may be adjusted within an appropriate range.

In one embodiment, the oil absorption number (OAN) of the conductive particles may be 100 ml/100 g to 600 ml/100 g, 150 ml/100 g to 500 ml/100 g, or 200 ml/100 g to 400 ml/100 g. Within this range, the secondary structure of the conductive particles may be appropriately developed, thereby further improving the electronic conductivity of the conductive coating.

In some embodiments, the content of the conductive coating may be 0.1 part by weight to 1 part by weight based on 100 parts by weight of the core particle 10. Within this range, the coverage of the conductive coating may be adjusted to an appropriate range, thereby improving both the electronic conductivity and ionic conductivity of the cathode active material.

For example, when the content of the conductive coating exceeds 1 part by weight, the conductive coating may completely cover the surface of the core particle 10 or increase the coating thickness.

In one embodiment, the content of the conductive coating may be 0.1 part by weight or more and less than 1 part by weight, 0.1 part by weight to 0.9 parts by weight, 0.2 part by weight to 0.8 parts by weight, or 0.3 part by weight to 0.7 parts by weight, based on 100 parts by weight of the core particle 10.

In some embodiments, the core particle 10 may have a median particle diameter ($D_{50}$) of 1 $\mu$m to 15 $\mu$m. The "median particle diameter ($D_{50}$)" may refer to the particle diameter at a cumulative volume fraction of 50% in a volume-based particle size distribution obtained by accumulating the particles in order of increasing particle diameter.

For example, if the median particle diameter of the core particle 10 is less than 1 $\mu$m, the specific surface area of the particles may increase excessively, which may lead to more pronounced side reactions with the electrolyte. Furthermore, the increased number of fine particles may decrease the electrode density and energy density.

For example, if the median particle diameter of the core particle 10 exceeds 15 $\mu$m, the larger particle size may increase the migration distance of lithium ions, which may degrade the capacity and output characteristics of the lithium secondary battery.

In one embodiment, the median particle diameter of the core particle 10 may be 2 $\mu$m to 12 $\mu$m, or 5 $\mu$m to 10 $\mu$m.

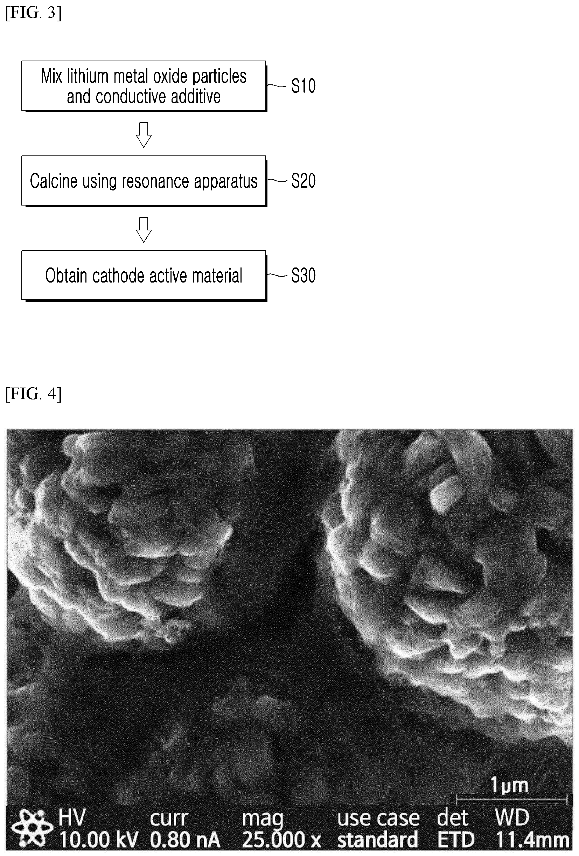

FIG. 3 is a process flowchart for describing a method for manufacturing a cathode active material according to exemplary embodiments. Hereinafter, the method for manufacturing a cathode active material described above will be described in detail with reference to FIG. 3.

Referring to FIG. 3, a mixture of lithium metal oxide particles and conductive particles may be prepared (e.g., step S10).

For example, lithium metal oxide particles and conductive particles may be introduced together into a resonant mixer.

As the lithium metal oxide particles and the conductive particles, the above-described materials may be used. For example, the conductive particles may include carbon black and/or carbon nanotubes. The carbon black and/or carbon nanotubes may each have the diameter, specific surface area, and/or oil absorption number described above.

In one embodiment, when the conductive particles include carbon nanotubes, the length of the carbon nanotubes may be 50 $\mu$m to 250 $\mu$m, 100 $\mu$m to 250 $\mu$m, or 100 $\mu$m to 200 $\mu$m. The length of the carbon nanotubes refers to the length in the major-axis direction.

In one embodiment, the conductive particles may include carbon black, for example, acetylene black.

In one embodiment, the content of the conductive particles in the mixture may be 0.1 part by weight to 1 part by weight, 0.1 part by weight or more and less than 1 part by weight, 0.1 part by weight to 0.9 part by weight, 0.2 part by weight to 0.8 part by weight, or 0.3 part by weight to 0.7 part by weight, based on 100 parts by weight of the lithium metal oxide particles.

A mixture of lithium metal oxide particles and conductive particles may be stirred using a resonant mixer (e.g., step S20).

As the resonant mixer, an acoustic resonant mixer may be used. Examples of the acoustic resonant mixer may include the LabRAM series from Resodyn.

In some embodiments, the mixing and stirring may be performed under dry conditions. For example, the lithium metal oxide particles and conductive particles may be mixed and stirred without a solvent.

As the lithium metal oxide particles and conductive particles are stirred using the acoustic resonant mixer, strong shear and collision forces induced by acoustic and vibrational energy act on the particles, causing the conductive particles to adhere to the surface of the lithium metal oxide particles.

For example, in the process of stirring the mixture using an acoustic resonant mixer, the conductive particles may partially cover the surface of the lithium metal oxide particles. Some of the conductive particles may agglomerate into an island shape, while others may be connected together in a chain shape.

In some embodiments, the mixture may be stirred at a frequency of 58 Hz to 62 Hz. Within this range, patterns having an island shape and patterns having a chain shape may be formed on the surface of the lithium metal oxide particles.

For example, if the frequency of the acoustic resonant mixer is less than 58 Hz, the conductive particles may completely cover the surface of the lithium metal oxide particles. Therefore, a conductive coating may be formed on the entire surface of the lithium metal oxide particles. If the frequency of the acoustic resonant mixer exceeds 62 Hz, the lithium metal oxide particles may fracture, and a chain-shaped or web-shaped coating may not be formed.

In one embodiment, the frequency of the acoustic resonant mixer may be 58.5 Hz to 61 Hz, or 59 Hz to 61 Hz.

In some embodiments, the mixture may be stirred at an acceleration greater than 40 G and less than 75 G. Within this range, the shape, coverage, and thickness of the conductive coating may be appropriately adjusted.

In one embodiment, the acceleration of the acoustic resonant mixer may be 50 G to 70 G, 50 G to 65 G, or 55 G to 65 G.

In some embodiments, the stirring time of the mixture may be 1 minute to 50 minutes, 5 minutes to 40 minutes, or 10 minutes to 30 minutes. Within this range, the conductive particles may be partially attached to the surface of the lithium metal oxide particles, and a conductive coating having an island shape and a chain shape may be more easily formed.

A cathode active material may be obtained from the resonant mixer (e.g., step S30).

The cathode active material may include a core particle including lithium metal oxide particles and a conductive coating partially formed on the core particle and including conductive particles.

A lithium secondary battery according to embodiments of the present disclosure may include the above-described cathode active material. The lithium secondary battery may include a cathode including the cathode active material and an anode disposed opposite the cathode.

According to exemplary embodiments, the cathode may include a cathode active material, a conductive material, and/or a binder. For example, a cathode slurry may be prepared by mixing and stirring the cathode active material with a conductive material and/or a binder in a solvent. The cathode slurry may be dried and roll-pressed to form the cathode.

In one embodiment, the cathode may include a cathode current collector and a cathode active material layer formed on the cathode current collector. For example, the cathode slurry may be coated on at least one surface of a cathode current collector, followed by drying and roll-pressing to fabricate the cathode.

The cathode current collector may include stainless steel, nickel, aluminum, titanium, or an alloy thereof. The cathode current collector may also include aluminum or stainless steel surface-treated with carbon, nickel, titanium, or silver.

The binder may include polyvinylidene fluoride-hexafluoropropylene copolymer (PVDF-co-HFP), polyvinylidene fluoride (PVDF), polyacrylonitrile, polymethylmethacrylate, nitrile-butadiene rubber, or the like.

A conductive material may be included to promote electron migration. For example, the conductive material may include carbon-based conductive materials such as graphite, carbon black, graphene, or carbon nanotubes; and/or metal-based conductive materials such as tin, tin oxide, and titanium oxide; as well as perovskite materials such as $LaSrCoO_3$, and $LaSrMnO_3$, etc.

In one embodiment, the cathode may further include a solid electrolyte. The solid electrolyte may provide an additional ion transport path for the cathode, thereby improving the capacity of the lithium secondary battery.

Since the conductive coating partially covers the surface of the lithium metal oxide particles, a sufficient ion transport path between the solid electrolyte and the cathode active material may be secured. Therefore, ion isolation within the cathode active material may be suppressed.

The solid electrolyte may include a sulfide-based electrolyte, an oxide-based electrolyte, or a polymer electrolyte. The polymer electrolyte may include an ion-conducting polymer or a gel polymer electrolyte.

In one embodiment, the sulfide-based electrolyte may be represented by Formula 2 below.

[Formula 2] $\quad\quad Li_eY_fP_gS_hZ_i$

In Formula 2, e, f, g, h and i may satisfy $0 < e < 12$, $0 \leq f \leq 6$, $0 \leq g \leq 6$, $0 < h \leq 12$, and $0 \leq i \leq 9$, Y may be at least one element selected from the group consisting of B, Al, Ga, In, Si, Ge, Sn, Pb, As, Sb, Bi, Ti, V, Cr, Mn, Fe, Co, Ni, Cu, Y, Zr, Nb, Mo, Tc, Ru, Rh, Pd, Ag, Hf, Ta and W, and Z may be at least one element selected from the group consisting of F, Cl, Br and I.

For example, the sulfide-based electrolyte may be an LPS-based solid electrolyte including Li, P and S, an LGPS-based solid electrolyte including Li, P, Ge and S, or an LSiPSCl-based solid electrolyte including Li, Si, P, S and Cl.

For example, as the sulfide-based electrolyte, $Li_2S\text{-}P_2S_5$, $Li_{10}GeP_2S_{12}$, $Li_{10}SnP_2S_{12}$, $Li_{9.54}Si_{1.74}P_{1.44}S_{11.7}Cl_{0.3}$, $Li_{10}(Si_{0.5}Ge_{0.5})P_2S_{12}$, $Li_{10}(Ge_{0.5}Sn_{0.5})P_2S_{12}$, $Li_{10}(Si_{0.5}Sn_{0.5})P_2S_{12}$, $Li_{10}GeP_2S_{11.7}O_{0.3}$, $Li_{9.6}P_3S_{12}$, $Li_9P_3S_9O_3$, $Li_{10.35}Ge_{1.35}P_{1.65}S_{12}$, $Li_{10.35}Si_{1.35}P_{1.65}S_{12}$, $Li_{9.81}Sn_{0.81}P_{2.19}S_{12}$, $Li_{9.42}Si_{1.02}P_{2.1}S_{9.96}O_{2.04}$, $Li_6PS_5Cl$, etc. may be used.

In one embodiment, the oxide-based electrolyte may include a metal oxide or an ion-conductive compound containing oxygen. For example, examples of the oxide-based electrolyte may include metal oxides such as $Al_2O_3$, $ZnO_2$, $Ce_2O_3$, $TiO_2$, $ZrO_2$, $HfO_2$, $MnO_2$, $MgO$, $WO_2$, $V_2O_5$, LLTO-based compounds, LLZO-based compounds, $Li_6La_2CaTa_2O_{12}$, $Li_6La_2ANb_2O_{12}$ (wherein A is Ca or Sr), $Li_2Nd_3TeSbO_{12}$, $Li_3BO_{2.5}N_{0.5}$, $Li_9SiAlO_8$, LAGP-based compounds, LATP-based compounds, $Li_{1+x}Ti_{2-x}Al_xSi_y(PO_4)_{3-y}(0 \leq x \leq 1, 0 \leq y \leq 1)$, $LiAl_xZr_{2-x}(PO_4)_3(0 \leq x \leq 1, 0 \leq y \leq 1)$, $LiTi_xZr_{2-x}(PO_4)_3$ (wherein, $0 \leq x \leq 1$, $0 \leq y \leq 1$), LISICON-based compounds, LIPON-based compounds, perovskite compounds, and NASICON-based compounds.

In one embodiment, the solid electrolyte may include a sulfide-based electrolyte. The sulfide-based electrolyte may exhibit high compatibility and stability with the cathode active material, thereby further improving the electrochemical properties of the lithium secondary battery.

In some embodiments, the content of the solid electrolyte may be 5 part by weight to 80 parts by weight, 10 part by weight to 70 parts by weight, or 15 part by weight to 60 parts by weight, based on 100 parts by weight of the cathode active material. Within this range, both the capacity and output characteristics of the lithium secondary battery may be improved.

For example, if the content of the solid electrolyte exceeds 80 parts by weight, the energy density of the cathode may be relatively reduced. If the content of the solid electrolyte is less than 5 parts by weight, the ionic conductivity of the cathode may be relatively reduced.

The anode may include an anode current collector and an anode active material layer formed on at least one surface of the anode current collector.

The anode current collector may include, for example, gold, stainless steel, nickel, aluminum, titanium, copper, or an alloy thereof, and may include, for example, copper or a copper alloy.

The anode active material layer may include an anode active material. As the anode active material, any active material known in the art may be used, so long as it is capable of absorbing and releasing lithium ions, without particular limitation. For example, carbon-based materials such as crystalline carbon, amorphous carbon, carbon composites, carbon fibers, etc.; a lithium alloy; silicon or tin may be used. Examples of the amorphous carbon may include hard carbon, coke, mesocarbon microbead (MCMB) calcined at 1500°C or lower, mesophase pitch-based carbon fiber (MPCF) or the like. Examples of the crystalline carbon may include graphite-based carbon such as natural graphite, graphitized coke, graphitized MCMB, graphitized MPCF or the like. Other elements included in the lithium alloy may include, for example, aluminum, zinc, bismuth, cadmium, antimony, silicon, lead, tin, gallium, indium or the like.

In some embodiments, an anode slurry may be prepared by mixing and stirring the anode active material with a binder, a conductive material and/or a dispersant in a solvent. The anode slurry may be coated on the anode current collector, followed by drying and roll-pressing to fabricate the anode.

As the binder and the conductive material, materials which are substantially the same as or similar to the above-described materials may be used. In some embodiments, a binder for forming an anode may include, for example, an aqueous binder such as styrene-butadiene rubber (SBR) to ensure compatibility with the carbon-based active material, and may be used together with a thickener such as carboxymethyl cellulose (CMC).

In some embodiments, a separator may be interposed between the cathode and the anode. The separator may include a porous polymer film made of a polyolefin polymer such as an ethylene homopolymer, a propylene homopolymer, an ethylene/butene copolymer, an ethylene/hexene copolymer, or an ethylene/methacrylate copolymer. The separator may also include a nonwoven fabric made of glass fibers having a high melting point, polyethylene terephthalate fibers or the like.

According to exemplary embodiments, the cathode, the anode and the separator may be repeatedly stacked to form an electrode assembly. In some embodiments, the electrode assembly may be a winding type, a stacking type, a z-folding type, or a stacked-folding type.

The electrode assembly may be accommodated in a case to define a lithium secondary battery. The lithium secondary battery may be manufactured, for example, in a cylindrical, prismatic, pouch, or coin type using a can.

According to exemplary embodiments, an electrolyte may be accommodated in the case together with the electrode assembly. A non-aqueous electrolyte may be used as the electrolyte.

The non-aqueous electrolyte may include a lithium salt of an electrolyte and an organic solvent. The lithium salt is represented by, for example, $Li^+X^-$, and as an anion $(X^-)$ of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, etc. may be exemplified.

As the organic solvent, for example, propylene carbonate (PC), ethylene carbonate (EC), diethyl carbonate (DEC), dimethyl carbonate (DMC), ethyl methyl carbonate (EMC), methyl propyl carbonate, dipropyl carbonate, dimethyl sulfuroxide, acetonitrile, dimethoxyethane, diethoxyethane, vinylene carbonate, sulfolane, $\gamma$-butyrolactone, propylene sulfite and tetrahydrofuran, etc. may be used. These may be used alone or in combination of two or more thereof.

In some embodiments, a solid electrolyte layer may be interposed between the cathode and anode. The solid electrolyte layer may include a sulfide-based electrolyte, an oxide-based electrolyte, or a polymer electrolyte.

In this case, the lithium metal battery may not include a separator or an electrolyte. The solid electrolyte layer may substantially function as a separator and may prevent a short circuit between the cathode and the anode. In addition, the solid electrolyte layer allows lithium ions to migrate between the cathode and anode.

**Preparative Example**

**(1) Preparation of core particle**

$NiSO_4$, $CoSO_4$, and $MnSO_4$ were mixed in a ratio of 88:9:3 using distilled water from which dissolved oxygen had been removed by bubbling $N_2$ for 24 hours. The solution was introduced into a reactor at 50°C, and NaOH as a precipitant and $NH_3 \cdot H_2O$ as a chelating agent were added thereto, followed by performing a co-precipitation reaction for 48 hours to obtain $Ni_{0.88}Co_{0.09}Mn_{0.03}(OH)_2$ as a transition metal precursor. The obtained precursor was dried at 80°C for 12 hours, and then further dried at 110°C for 12 hours.

Lithium hydroxide and the transition metal precursor were added to a dry high-speed mixer in a ratio of 1.01:1 to 1.025:1 and uniformly mixed for 5 minutes. The mixture was put into a calcination furnace, heated to 730°C to 750°C at a heating rate of 2°C/min, and maintained at 730°C to 750°C for 10 hours. Oxygen was continuously supplied at a flow rate of 10 mL/min during the heating and holding steps. After completion of the calcination, the calcined product was allowed to cool naturally to room temperature, and then pulverized and classified to obtain core particles having a composition of $LiNi_{0.88}Co_{0.09}Mn_{0.03}O_2$ ($D_{50}$: 10 $\mu$m).

**(2) Preparation of cathode active material**

**Example 1**

100 parts by weight of the core particles prepared above and 0.5 parts by weight of acetylene black (diameter: 25 nm to 30 nm, OAN: 200 ml/100 g, specific surface area: 100 $m^2/g$) were added to an acoustic resonant mixer (LabRAMII, Resodyn).

The acoustic resonant mixer was set to a frequency of 60 Hz and an acceleration of 60 G, and the mixture was stirred for 20 minutes. The cathode active material was then obtained from the acoustic resonant mixer.

**Example 2**

A cathode active material was prepared in the same manner as in Example 1, except that 0.1 part by weight of acetylene black was added to the acoustic resonant mixer.

**Example 3**

A cathode active material was prepared in the same manner as in Example 1, except that 1 part by weight of acetylene black was added to the acoustic resonant mixer.

**Example 4**

A cathode active material was prepared in the same manner as in Example 1, except that 0.5 part by weight of carbon nanotubes (diameter: 6 nm to 9 nm, length: 100 $\mu$m to 200 $\mu$m, specific surface area: 400 $m^2/g$ to 600 $m^2/g$) was

added to the acoustic resonant mixer instead of acetylene black.

**Comparative Example 1**

A cathode active material was prepared in the same manner as in Example 1, except that the acceleration of the acoustic resonant mixer was changed to 75 G.

**Comparative Example 2**

A cathode active material was prepared in the same manner as in Example 1, except that the acceleration of the acoustic resonant mixer was changed to 40 G.

**Comparative Example 3**

The core particles prepared above were used as a cathode active material without forming a conductive coating.

**Comparative Example 4**

A cathode active material was prepared in the same manner as in Example 1, except that 0.05 part by weight of acetylene black was added.

**Comparative Example 5**

A cathode active material was prepared in the same manner as in Example 1, except that 3 parts by weight of acetylene black was added.

**(3) Manufacture of lithium secondary battery**

A secondary battery was manufactured using the cathode active material prepared above. Specifically, the cathode active materials of the examples and comparative examples, a solid electrolyte ($Li_6PS_5Cl$), a binder (PVdF), and a conductive material (Super P) were mixed in a mass ratio of 68:28:2:2, respectively, to prepare a cathode slurry.
The cathode slurry was uniformly applied onto an aluminum foil (thickness: 15 $\mu$m), and then dried and roll-pressed to fabricate a cathode.
A solid electrolyte ($Li_6PS_5Cl$) placed in a SUS circular mold having a diameter of $\Phi$13 with a loading of 10 mg/cm$^2$ and was press-molded using uniaxial cold isostatic pressing (CIP) at 80 MPa to fabricate a solid electrolyte pellet. The cathode was placed on one surface of the solid electrolyte pellet with a loading of 10 mg/cm$^2$ and was pressed at 350 MPa to form an integrated pellet. Then, an indium (In) foil was placed on the other surface and was pressed at 50 MPa to manufacture an electrode cell having a cathode composite-solid electrolyte-In anode structure. The electrode cell was assembled into a coin cell outer case having a diameter of $\Phi$20.

**Experimental Example**

**(1) Measurement of coating shape**

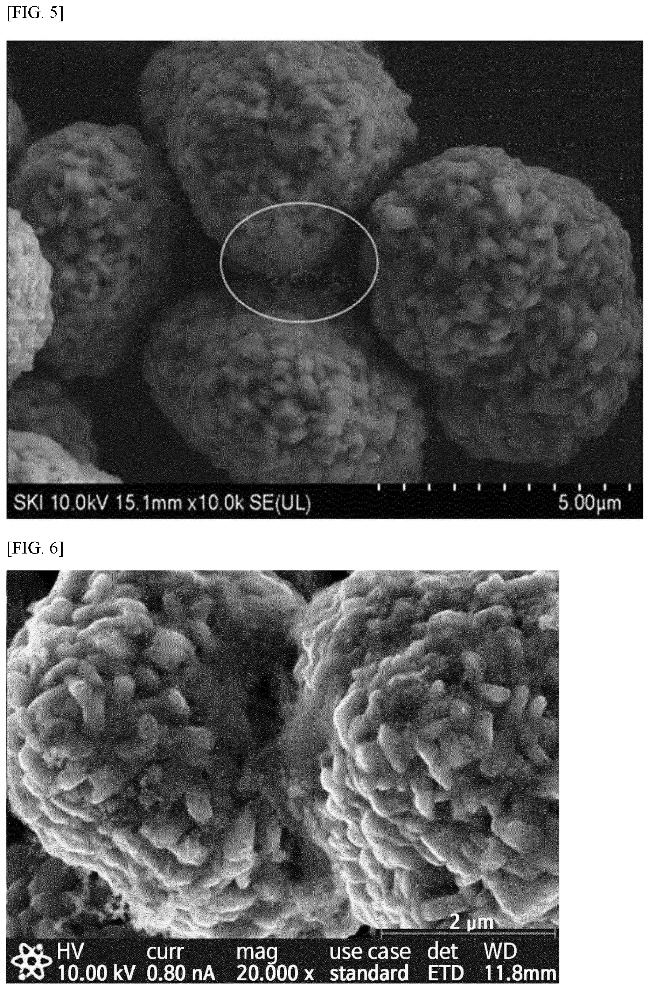

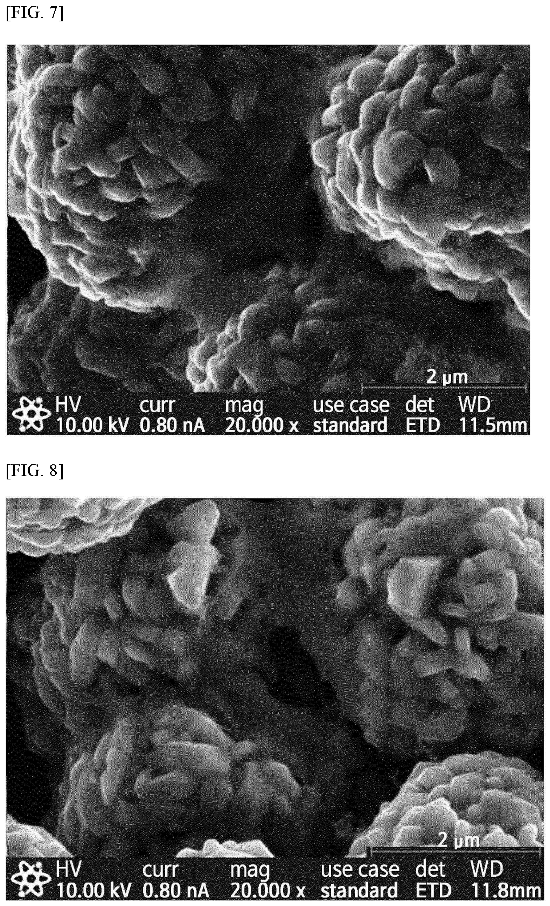

FIGS. 4 to 7 are scanning electron microscope (SEM) images of the cathode active materials prepared sequentially in Examples 1 to 4.
Referring to FIG. 4, in Example 1, island-shaped and web-shaped coatings were formed on the surface of the core particle. Referring to FIG. 5, in Example 2, island-shaped and web-shaped coatings were formed on the surface of the core particle. Referring to FIG. 6, in Example 3, island-shaped and web-shaped coatings were formed on the surface of the core particle. Referring to FIG. 7, in Example 4, island-shaped and web-shaped coatings were formed on the surface of the core particle.

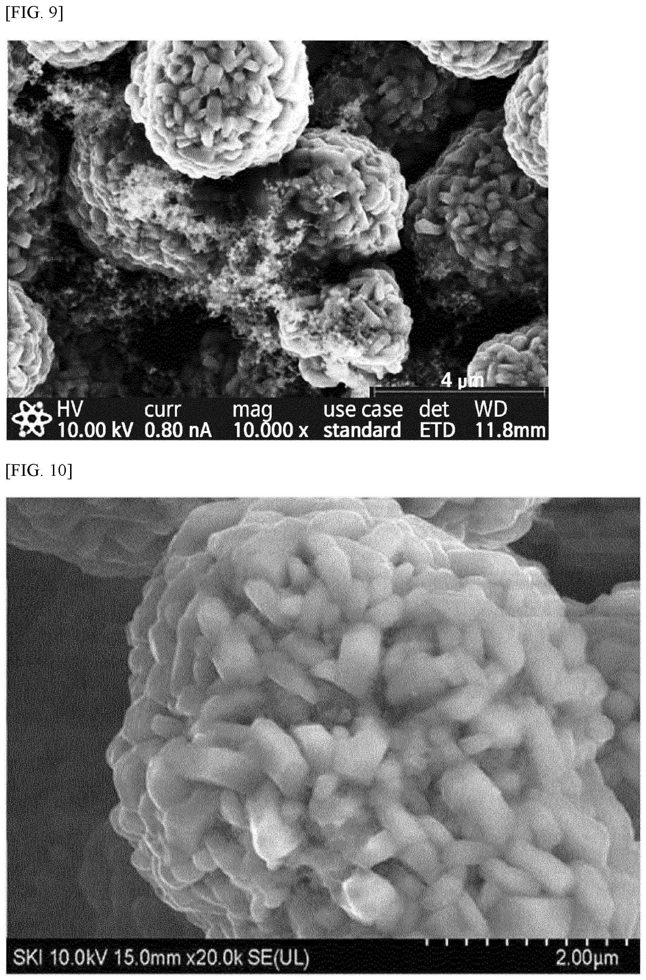

FIGS. 8 and 9 are SEM images of the cathode active materials prepared in Comparative Example 1 and Comparative Example 2, respectively.
Referring to FIG. 8, in Comparative Example 1, only a web-shaped coating was formed on the surface of the core particle. Referring to FIG. 9, in Comparative Example 2, only an island-shaped coating was formed on the surface of the core particle.

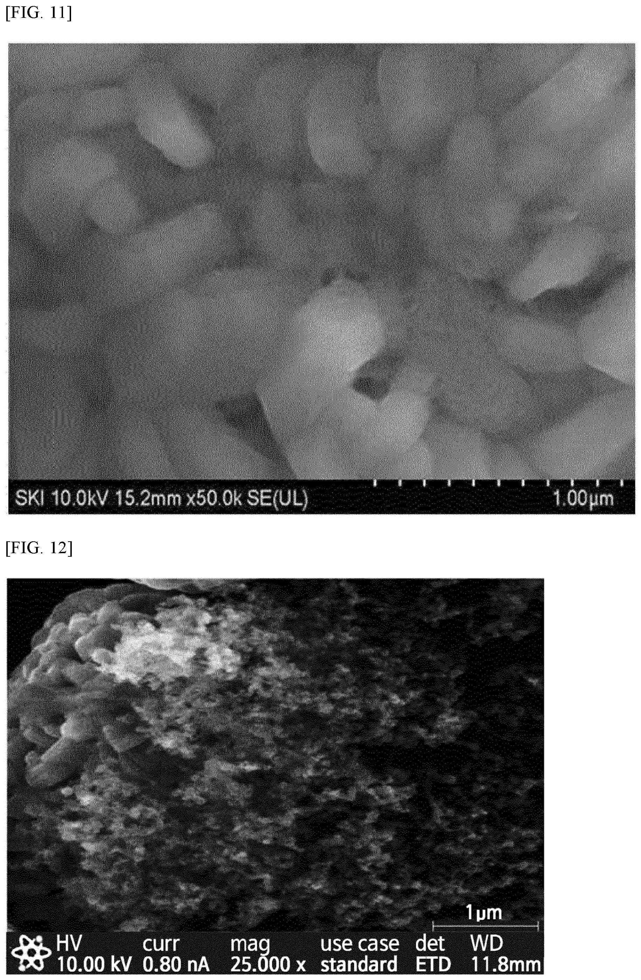

FIG. 10 is an SEM image of the cathode active material manufactured in Comparative Example 4. FIG. 11 is an enlarged view of FIG. 10. FIG. 12 is an SEM image of the cathode active material manufactured in Comparative Example 5.

Referring to FIGS. 10 and 11, in Comparative Example 4, only an island-shaped coating was formed on the surface of the core particle. Referring to FIG. 12, in Comparative Example 5, a film-shaped coating was formed on the surface of the core particle.

## (2) Evaluation of capacity

The manufactured coin cell was charged and discharged at 0.1C for the first 3 cycles at a temperature of 30°C under cut-off conditions of charging at 4.3 V and discharging at 2.5 V, and the discharge capacity (B1) in the first cycle was measured. Thereafter, 2 cycles of charge and discharge were performed at a rate of 0.2C, and 2 additional cycles of charge and discharge were performed at a rate of 0.5C. Subsequently, the cell was charged and discharged at 1C, and the discharge capacity (B2) was measured.

The high-rate characteristics were evaluated as the percentage of the discharge capacity (B2) at a high rate (1C) relative to the discharge capacity (B1) at a low rate (0.1C), as shown in Equation 1 below.

[Equation 1]

$$\text{High-rate capacity characteristics (\%)} = B2/B1 \times 100\%$$

## (3) Initial efficiency

The manufactured coin cell was charged (CC-CV 0.1C, 4.3 V, 0.01C cut-off) and discharged (CC 0.1C, 2.5 V cut-off) at 30°C to measure the initial charge and discharge capacities. The initial efficiency was evaluated as the percentage of the initial discharge capacity (A2) to the initial charge capacity (A1), as shown in Equation 2 below.

[Equation 2]

$$\text{Initial efficiency (\%)} = A2/A1 \times 100\%$$

The evaluation results are shown in Table 1 below.

[TABLE 1]

|  | High-rate capacity (%) | Initial efficiency (%) |
|---|---|---|
| Example 1 | 85.5 | 80.5 |
| Example 2 | 82.0 | 74.1 |
| Example 3 | 83.9 | 76.4 |
| Example 4 | 85.7 | 82.5 |
| Comparative Example 1 | 78.1 | 63.7 |
| Comparative Example 2 | 77.5 | 61.8 |
| Comparative Example 3 | 75.1 | 58.3 |
| Comparative Example 4 | 75.3 | 59.0 |
| Comparative Example 5 | 70.1 | 52.4 |

The cathode active materials prepared in the examples had coatings having web and island shapes partially formed on the surface of the core particles, and the lithium secondary batteries exhibited high capacity and high initial efficiency.

The lithium secondary batteries manufactured in the comparative examples exhibited reduced capacity characteristics and initial efficiency compared to the examples.

## Claims

1. A cathode active material comprising:

lithium metal oxide particles; and

a conductive coating that partially covers the surface of the lithium metal oxide particles and includes a plurality of conductive particles,

wherein the conductive coating comprises a first pattern having an island shape and a second pattern having a chain shape.

2. The cathode active material according to claim 1, wherein the first pattern has a diameter of 0.03 μm or more and less than 1.0 μm.

3. The cathode active material according to claim 1, wherein the second pattern has a length of 1.0 μm to 10.0 μm.

4. The cathode active material according to claim 1, wherein the conductive coating further comprises a third pattern having a web shape formed by connecting a plurality of the second patterns.

5. The cathode active material according to claim 1, wherein the content of the conductive coating is 0.1 part by weight to 1 part by weight based on 100 parts by weight of the lithium metal oxide particles.

6. The cathode active material according to claim 1, wherein the conductive particles include at least one of carbon black and carbon nanotubes.

7. The cathode active material according to claim 1, wherein the lithium metal oxide particles have a median particle diameter (D50) of 1 μm to 15 μm.

8. A lithium secondary battery comprising:

a cathode comprising the cathode active material according to claim 1; and

an anode disposed opposite the cathode.

9. The lithium secondary battery according to claim 8, wherein the cathode further comprises a solid electrolyte.

10. A method for manufacturing a cathode active material, comprising:

preparing a mixture of lithium metal oxide particles and conductive particles; and

stirring the mixture using a resonant mixer,

wherein the content of the conductive particles in the mixture is 0.1 part by weight to 1 part by weight based on 100 parts by weight of the lithium metal oxide particles.

11. The method for preparing a cathode active material according to claim 10, wherein the step of stirring the mixture using a resonant mixer comprises coating the conductive particles on the surface of the lithium metal oxide particles.

12. The method for preparing a cathode active material according to claim 11, wherein the conductive particles partially cover the surface of the lithium metal oxide particles.

13. The method for preparing a cathode active material according to claim 11, wherein some of the conductive particles agglomerate into an island shape, while others are connected together in a chain shape.

14. The method for preparing a cathode active material according to claim 10, wherein the conductive particles include at least one of carbon black and carbon nanotubes.

15. The method for preparing a cathode active material according to claim 14, wherein the carbon black has a specific surface area of 65 m2/g to 120 m2/g.

16. The method for preparing a cathode active material according to claim 14, wherein the carbon nanotube has a specific surface area of 250 m2/g to 700 m2/g.

17. The method for preparing a cathode active material according to claim 10, wherein the resonant mixer is an acoustic resonant mixer.

**18.** The method for preparing a cathode active material according to claim 10, wherein the mixture is stirred at a frequency of 58 Hz to 62 Hz.

**19.** The method for preparing a cathode active material according to claim 10, wherein the mixture is stirred at an acceleration of greater than 40 G and less than 75 G

[FIG. 1]

[FIG. 2]

[FIG. 3]

```
┌─────────────────────────────┐
│ Mix lithium metal oxide      │
│   particles                  │── S10
│ and conductive additive      │
└─────────────────────────────┘
              ⇩
┌─────────────────────────────┐
│ Calcine using resonance      │── S20
│          apparatus           │
└─────────────────────────────┘
              ⇩
┌─────────────────────────────┐
│ Obtain cathode active        │── S30
│          material            │
└─────────────────────────────┘
```

[FIG. 4]

[FIG. 5]

[FIG. 6]

[FIG. 7]

[FIG. 8]

[FIG. 9]

[FIG. 10]

[FIG. 11]

SKI 10.0kV 15.2mm x50.0k SE(UL)                    1.00μm

[FIG. 12]

| | HV | curr | mag | use case | det | WD |
| | 10.00 kV | 0.80 nA | 25.000 x | standard | ETD | 11.8mm |

## INTERNATIONAL SEARCH REPORT

| International application No. |
|---|
| **PCT/KR2024/010599** |

### A. CLASSIFICATION OF SUBJECT MATTER

**H01M 4/36**(2006.01)i; **H01M 4/48**(2010.01)i; **H01M 10/052**(2010.01)i; **C01G 45/12**(2006.01)i; **C01G 53/00**(2006.01)i; **C01B 25/45**(2006.01)i; **C01G 31/02**(2006.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/36(2006.01); H01M 10/0525(2010.01); H01M 4/583(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 (cathode), 리튬 금속 산화물 (lithium metal oxide), 코팅 (coating), 아일랜드 (island), 체인 (chain), 카본블랙 (carbon black), 탄소나노튜브 (carbon nanotube), 공명 믹서 (resonant acoustic mixer)

### C. DOCUMENTS CONSIDERED TO BE RELEVANT

| Category* | Citation of document, with indication, where appropriate, of the relevant passages | Relevant to claim No. |
|---|---|---|
| X | SIM, S.-J. et al. Use of carbon coating on LiNi0.8Co0.1Mn0.1O2 cathode material for enhanced performances of lithium-ion batteries. Scientific Reports. 2020, vol. 10, thesis no. 11114, pp. 1-9.<br>See abstract; pages 2, 3 and 6; and figure 1. | 1-19 |
| A | KIM, Y.-J. et al. Novel dry deposition of LiNbO3 or Li2ZrO3 on LiNi0.6Co0.2Mn0.2O2 for high performance all-solid-state lithium batteries. Chemical Engineering Journal. 2020, vol. 386, thesis no. 123975, pp. 1-16.<br>See abstract; and pages 2 and 3. | 1-19 |
| A | JP 2019-175631 A (TDK CORP.) 10 October 2019 (2019-10-10)<br>See abstract; and paragraphs [0009], [0011], [0012], [0014], [0016], [0025], [0027], [0041] and [0079]. | 1-19 |
| A | JP 2014-035859 A (TOYOTA MOTOR CORP.) 24 February 2014 (2014-02-24)<br>See abstract; claims 1-8; and figures 1, 8 and 9. | 1-19 |

☑ Further documents are listed in the continuation of Box C.     ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **25 October 2024** | **27 October 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**EP 4 756 906 A1**

**INTERNATIONAL SEARCH REPORT**

| International application No. |
|---|
| **PCT/KR2024/010599** |

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2013-0016918 A (CHUNGBUK NATIONAL UNIVERSITY INDUSTRY-ACADEMIC COOPERATION FOUNDATION) 19 February 2013 (2013-02-19)<br>See abstract; and claims 1-12. | 1-19 |

Form PCT/ISA/210 (second sheet) (July 2022)

21

**INTERNATIONAL SEARCH REPORT**
Information on patent family members

International application No.

**PCT/KR2024/010599**

| Patent document cited in search report | | | Publication date (day/month/year) | Patent family member(s) | | | Publication date (day/month/year) |
|---|---|---|---|---|---|---|---|
| JP | 2019-175631 | A | 10 October 2019 | JP | 7069938 | B2 | 18 May 2022 |
| JP | 2014-035859 | A | 24 February 2014 | None | | | |
| KR | 10-2013-0016918 | A | 19 February 2013 | KR | 10-1252044 | B1 | 12 April 2013 |

Form PCT/ISA/210 (patent family annex) (July 2022)